# EUROPÄISCHE PATENTSCHRIFT

(11) **EP 2 323 334 B1**
(45) Veröffentlichungstag und Bekanntmachung des Hinweises auf die Patenterteilung: **21.01.2015**
(21) Anmeldenummer: 10187415.4
(22) Anmeldetag: 13.10.2010
(51) Int. Cl.: H04L 29/06

(54) **Freigabe einer Verbindung durch eine Firewall eines Netzzugriffsgerät**
Approval of a connection through a firewall of a network access device
Libération d'une liaison à travers un pare-feu d'un appareil d'accès au réseau

(30) Priorität: 13.11.2009 DE 102009044525
(43) Veröffentlichungstag der Anmeldung: 18.05.2011
(73) Patentinhaber: Vodafone Holding GmbH, 40213 Düsseldorf (DE)
(72) Erfinder: Ackermann, Thomas, 41540, Dormagen (DE)
(74) Vertreter: Ring & Weisbrodt

(56) Entgegenhaltungen:
- US-A1- 2006 291 502
- US-A1- 2007 147 399
- Andreas Müller, Sebastian Kiesel: "Issues with the Interworking of Application Layer Protocols and the MIDCOM Architecture" Proceedings of the 10th Open European Summer School and IFIP WG 6.3 Workshop (EUNICE 2004), [Online] Juni 2004 (2004-06), Seite 8PP, XP002623213 Tampere Gefunden im Internet: URL:http://www.ikr.uni-stuttgart.de/printa ble/Content/Publications/Archive/Ki_paper- midcom-eunic2004_36357.pdf> [gefunden am 2011-02-16]

## Beschreibung

### Technisches Gebiet

Die Erfindung betrifft ein Verfahren mit den Merkmalen des Anspruchs 1

Weiterhin betrifft die Erfindung ein Netzzugriffsgerät, welches über mindestens ein Telekommunikationsnetz eine paketbasierte Datenverbindung über ein öffentliches paketorientiertes Datennetz mit einer dem Netzzugriffsgerät zugeordneten Netzadresse und Telefonie mit einer dem Netzzugriffsgerät zugeordneten Rufnummer ermöglicht, wobei das Netzzugriffsgerät die Merkmale des Anspruchs 9 aufweist.

### Stand der Technik

Als öffentliche Telekommunikationsnetze sind insbesondere leitungsgebundene Festnetze nach dem analogen POTS- (Plain Old Telefon Service) oder dem digitalen ISDN- (Integrated Services Digital Network) zusammen mit dem DSL- (Digital Subscriber Line) Standard und Mobilfunknetze mit funkbasiertem Zugangsnetz nach dem GSM/GPRS- (Global System for Mobile Communications / General Packet Radio Service), dem UMTS- (Universal Mobile Telecommunications System) oder dem LTE-(Long Term Evolution) Standard bekannt. Der LTE-Standard ist ein Standard für Mobilfunknetze der vierten Generation (4G). Diese Telekommunikationsnetze bieten einem Teilnehmer neben Telefonie und anderen leitungsorientierten Diensten auch paketorientierte Dienste, wie z.B. eine Nutzung des Internets, an.

Zur Inanspruchnahme dieser Dienste benötigt der Teilnehmer vor Ort ein Teilnehmer-Endgerät (engl. CPE: Customer Premises Equipment). Telefone, Faxgeräte und Modems sind häufig verwendete CPE-Geräte, welche dem Teilnehmer einen Zugriff auf ein Telefonnetz oder das Internet ermöglichen. DSL-Modems werden auch als CPE-Modems bezeichnet. Im Zuge der derzeit erfolgenden Umstellung traditioneller leitungsvermittelnder Telekommunikationsnetze auf eine einheitlich paketvermittelnde Netzinfrastruktur kommen vermehrt auch sogenannte Integrierte Zugriffsgeräte (engl. IAD: Integrated Access Device) zum Einsatz. Diese Zugriffsgeräte ersetzen bei einem NGN (Next Generation Network) neben dem DSL-Modem und einem DSL-Splitter auch analoge oder ISDN-Netzabschlussvorrichtungen (z.B. einen NTBA: Network Termination for ISDN Basic Rate Access) und verfügen üblicherweise über entsprechende Schnittstellen für analoge Telefongeräte, ISDN-Geräte und lokale Rechner oder lokale Netzwerke. Zur Nutzung von Diensten über ein Telekommunikationsnetz wird dem Teilnehmer bzw. dem Netzzugriffsgerät neben einer Rufnummer auch eine Netzadresse, üblicherweise eine IP-Adresse (Internet-Protokoll-Adresse), zugeteilt.

Ferner enthalten Netzzugriffsgeräte wie CPE-Modems oder IADs eine sogenannte Firewall zum Schutz vor unerlaubten Zugriffen aus dem Internet. Die Firewall überwacht einen durch sie hindurch laufenden Datenverkehr und entscheidet anhand festgelegter Regeln, ob bestimmte Datenpakete durchgelassen werden, oder nicht. Basierend auf einer Absender- oder Zieladresse und verwendeter Dienste werden nur bestimmte, zuvor festgelegte Kommunikationsverbindungen zugelassen und alle anderen unterbunden.

Bei einer bidirektionalen Verbindung zwischen zwei Rechnern über das Internet wird das TCP (Transmission Control Protokoll) verwendet, welches seinerseits auf das Internet-Protokoll (IP) aufsetzt. Eine TCP-Verbindung wird eindeutig durch zwei Endpunkte identifiziert. Ein Endpunkt besteht aus einer IP-Adresse und einem Port. Ein solches Paar bildet bei einem Rechner eine bidirektionale Schnittstelle und wird auch als Socket bezeichnet. Mit Hilfe der IP-Adressen werden die an der Verbindung beteiligten Rechner identifiziert. Die Ports identifizieren bei beiden beteiligten Rechnern die miteinander kommunizierenden Applikationen oder Dienste. Eine Firewall überwacht sowohl IP-Adressen als auch Ports und lässt Verbindungen in Abhängigkeit der IP-Adressen und/oder einer Portnummer zu oder verhindert diese.

Die WO 2008/149126 A2 beschreibt ein Peripheriegerät für einen Computer, welches ein Modem für Datenverbindungen über ein Mobilfunknetz enthält. Das Peripheriegerät ist vorzugsweise als Maus ausgebildet und verfügt über ein Autorisierungsmittel zum Prüfen einer eingehenden Verbindungsanfrage eines zweiten Computers zum Aufbau einer sicheren Verbindung. Die Verbindungsanfrage geht über eine leitungsbasierte GSM-Verbindung bei dem Peripheriegerät ein. Das Autorisierungsmittel stellt die Identität des zweiten Computers anhand einer mit der GSM-Verbindung empfangenen Rufnummer des zweiten Computers fest und überprüft, ob eine sichere Verbindung zu dem zweiten Computer erwünscht ist. Ist dies der Fall, werden über die GSM-Verbindung digitale Schlüssel zum Aufbau der sicheren Verbindung ausgetauscht. Die sichere Verbindung wird anschließend unter Verwendung der digitalen Schlüssel über ein Mobilfunknetz der 3. Generation (z.B. nach dem UMTS-Standard) mit hoher Datenübertragungsrate aufgebaut.

Die US 2006/291502 A1 offenbart ein Verfahren und ein System zum Aufbau einer IP-Verbindung zwischen einem Anfangs-Netzknoten in einem öffentlichen Netz und einem End-Netzknoten in einem privaten Telekommunikationsnetz. Der End-Netzknoten ist dazu angepasst ist, eine Verbindungsanfrage vom Anfangs-Netzknoten über eine Non-IP-Verbindung zu empfangen. Auf Basis der Verbindungsanfrage wird dann vom End-Netzknoten eine IP-Verbindung mit dem Anfangs-Netzknoten initiiert.

Die US 2007/147399 A1 offenbart eine System und ein Verfahren zwischen zwei Vorrichtungen zum Aufbau einer IP-Verbindung, wobei ein erstes Gerät über einen temporär genutzten zweiten Verbindungskanal seine IP-Adresse an das andere Gerät schickt, um dann eine IP-Verbindung über einen ersten Verbindungskanal mit dem anderen Gerät in einem öffentlichen Computernetz aufzubauen. Dabei kann der zweite Verbindungskanal zum Beispiel als eine Festnetzleitung oder als ein leitungsvermittelter oder ein paketvermittelter Gesprächskanal in einem Mobilfunknetz ausgebildet sein, über den per Telefonie oder Kurznachricht (SMS) die IP-Adresse übermittelt wird.

Ein Nachteil der bekannten Verfahren zu Freigeben einer Verbindung über ein Netzzugriffsgerät mit einer Firewall besteht darin, dass für erwünschte eingehende Verbindungen stets bestimmte Ports über die Firewall erreichbar sein müssen. Möchte beispielsweise ein Teilnehmer jederzeit mit einem anderen Endgerät eine Verbindung über das Internet zu seinem Netzzugriffsgerät oder einem damit verbundenem Rechner aufbauen können, so muss die Firewall entsprechende Ports permanent offen halten.

Möchte der Teilnehmer dieses zudem mit einem beliebigen Endgerät, z.B. in einem Internetcafé oder bei Bekannten, durchführen, müssen die Ports für beliebige IP-Adressen offen gehalten werden. Durch dieses Vorgehen entstehen jedoch erhebliche Sicherheitsrisiken. Unbefugte Personen können vom Internet aus die offenen Ports für ein Überwinden der Firewall nutzen und auf diese Weise Zugriff auf sensible Daten erhalten.

### Offenbarung der Erfindung

Aufgabe der Erfindung ist es daher, Nachteile des Standes der Technik zu vermeiden und die Sicherheit bei Verbindungen über ein öffentliches paketorientiertes Datennetz durch eine Firewall eines Netzzugriffsgeräts zu erhöhen.

Erfindungsgemäß wird die Aufgabe mit einem Verfahren mit den Merkmalen des Anspruchs 1

Weiterhin wird die Aufgabe mit einem Netzzugriffsgerät mit den Merkmalen des Anspruchs 9 gelöst.

Die Erfindung beruht auf dem Prinzip, zunächst eingehenden Verbindungen durch die Firewall zu blockieren und erst nach einer positiven Überprüfung eines Identifizierungsmerkmals eine Verbindung durch die Firewall zuzulassen. Das Identifizierungsmerkmal wird dazu durch einen Anruf oder eine Kurznachricht an die dem Netzzugriffsgerät zugeordnete Rufnummer übermittelt. Als Kurznachricht wird beispielsweise eine SMS-Nachricht (Short Message Service) benutzt. Die dabei benutzte Telefon- oder Kurznachrichtenübermittelungsverbindung zum Netzzugriffsgerät wird nicht von der Firewall blockiert, da diese nur paketorientierte Verbindungen über das öffentliche Datennetz kontrolliert. Mit anderen Worten wird über eine Telefon- oder Kurznachrichtenverbindung und einem darüber übermittelten Identifizierungsmerkmal eine Verbindung vom öffentlichen Datennetz durch die Firewall freigegeben.

Durch das erfindungsgemäße Verfahren und das erfinderische Netzzugriffsgerät wird eine Verbindung vom öffentlichen Datennetz zum Netzzugriffsgerät oder daran angeschlossenen Geräten erst dann zugelassen, wenn dieses durch einen entsprechenden Anruf oder eine Kurznachricht veranlasst wird. Vorher lässt die Firewall keine oder nur einige sichere eingehenden Verbindungen zu und sorgt so für einen optimalen Schutz vor Angriffen aus dem öffentlichen Datennetz. Erfolgt ein oben beschriebener Anruf, wird zunächst anhand eines übermittelten Identifizierungsmerkmals eine Berechtigung geprüft. Bei positivem Prüfergebnis lässt die Firewall Verbindungen bzw. Datenpaket an freigegebene Ports zu. Auf diese Weise wird eine sehr hohe Sicherheit gegenüber unbefugten Zugriffen aus dem öffentlichen Datennetz erzielt und gleichzeitig ein berechtigter Zugriff unkompliziert gewährleistet.

Bei einer vorteilhaften Ausbildung des erfindungsgemäßen Verfahrens zum Freigeben einer Verbindung über ein öffentliches paketorientiertes Datennetz an einer Firewall eines Netzzugriffsgeräts wird eine Übereinstimmung des übermittelten Identifizierungsmerkmals mit einem bei dem Netzzugriffsgerät gespeicherten Identifizierungsmerkmal geprüft. Hierdurch wird ein schnelles und sicheres Überprüfen der Berechtigung des Anrufers oder Absenders für eine Freischaltung einer Verbindung vom öffentlichen Datennetz durchführbar. Vorzugweise kann der Benutzer des Netzzugriffsgeräts ein Speichern oder ein Ändern des gespeicherten Identifizierungsmerkmals selber vornehmen. Die Berechtigungsprüfung lässt sich so sehr flexibel an Anwendungswünsche und -bedürfnisse des Benutzers anpassen.

Als Identifizierungsmerkmal wird in einer bevorzugten Ausgestaltung der Erfindung eine an das Netzzugriffsgerät übermittelte Rufnummer des Anrufenden oder des Absenders einer Kurznachricht verwendet. Dieses kann bei einem Anruf beispielsweise durch CLIP (Calling Line Identification Presentation) erfolgen. CLIP wird bei analogen und ISDN-Telefonnetzen und bei Mobilfunknetzen verwendet, um die Rufnummer eines Anrufers bereits vor einer Annahme des Anrufs an das angerufene Endgerät zu übermitteln. Bei Kurznachrichten, wie z.B. einer SMS-Nachricht, wird üblicherweise die Rufnummer eines Absenders in der Kurznachricht an einen Empfänger übermittelt. CLIP und die Absenderrufnummer in einer SMS gelten als sehr fälschungssicher. Somit wird bei einer Verwendung einer auf diese Weise übermittelten Rufnummer als Identifizierungsmerkmal eine sehr hohe Sicherheit erreicht. Ferner erfolgt bei einem Anruf eine Übermittlung der Rufnummer auch ohne Annahme des Anrufs und daher sehr kostengünstig für einen Benutzer.

Eine weitere Ausbildung des erfindungsgemäßen Verfahrens verwendet vorteilhaft eine von dem Anrufer oder dem Absender eingegebenen und durch den Anruf oder die Kurznachricht übermittelte Kennung als Identifizierungsmerkmal. Durch diese Maßnahme ist eine Übermittlung eines gültigen Identifizierungsmerkmals auch bei einer Unterdrückung einer Rufnummernübermittlung (z.B. CLIR: Calling Line Idenfication Restriction) oder bei einer Verwendung eines fremden Endgeräts möglich. Für einen Benutzer wird sehr anwendungsfreundlich eine Verwendung vieler verschiedener Endgeräte zum Freigeben eine Verbindung durch die Firewall des Netzzugriffsgeräts ermöglicht.

Ferner wird in einer vorteilhaften Ausbildung des erfindungsgemäßen Verfahrens zum Freigeben einer Verbindung mit dem Identifizierungsmerkmal eine Adresse eines für die Verbindung benutzten Endgeräts durch den Anruf oder die Kurznachricht übermittelt. Mit der vorliegenden Adresse ist es möglich, nur Verbindungen von dem benutzen Endgerät freizugeben. Beispielsweise lässt die Firewall nur Datenpakete von dem Endgerät durch einen geöffneten Port passieren. Hierdurch wird die Sicherheit gegenüber unbefugten Zugriffen optimiert.

Eine bevorzugte Weiterbildung des erfindungsgemäßen Verfahrens sieht ein Festlegen von Verbindungseigenschaften vor einer Freigabe der Verbindung vor. Vorzugsweise erfolgt dieses durch den Benutzer oder einen Betreiber des Telekommunikationsnetzes vor oder während einer Inbetriebnahme des Netzzugriffsgeräts. Eine spätere Festlegung oder Änderung von Verbindungseigenschaften während des Betriebs ist ebenfalls durchführbar. Dabei werden insbesondere möglichen Aktivitäten über eine freigegebene Verbindung zu einem öffentlichen Datennetz festgelegt. Durch diese Maßnahme lässt sich eine von der Firewall des Netzzugriffsgeräts freizugebende Verbindung optimal an eine Vielzahl von Anwendungen anpassen. Das erfindungsgemäße Verfahren ist universell einsetzbar. Mit der Festlegung möglicher Aktivitäten wird ferner die Sicherheit gegenüber unbefugten Zugriffen aus dem öffentlichen Datennetz über die freigegebene Verbindung wesentlich erhöht.

Vorzugweise werden in einer Ausbildung des erfindungsgemäßen Verfahrens Steuerungsbefehle für das Netzzugriffsgerät durch den Anruf oder die Kurznachricht übermittelt. Das Netzzugriffsgerät und Eigenschaften der Verbindung lassen sich unmittelbar vor einer Freigabe durch das Netzzugriffsgerät an aktuelle Wünsche und Bedürfnisse des Benutzers anpassen. Eine solche Anpassung ist für den Benutzer sehr vorteilhaft zu jeder Zeit von entfernten Orten aus möglich. Durch eine Konfiguration unmittelbar vor einer Freigabe einer Verbindung wird weiterhin die Sicherheit vor unbefugten Zugriffen erhöht, da die Verbindung nicht von vornherein für alle möglichen Anwendungswünsche des Benutzers freizugeben ist.

Ferner sieht eine weitere vorteilhafte Ausgestaltung des erfindungsgemäßen Verfahrens vor, dass die zugewiesene Netzadresse des Netzzugriffsgeräts nach dem Freigeben der Verbindung von einem Adressenübermittlungsmodul mit einer E-Mail oder einer Kurznachricht an den Anrufenden oder Absender übermittelt wird. Auf diese Weise wird auch bei unbekannter Netzadresse des Netzzugriffsgeräts ein Verbindungsaufbau zum Netzzugriffsgerät unproblematisch und schnell möglich. Besonders praktisch ist dieses Vorgehen bei Netzadressen, welche bei Inbetriebnahme des Netzzugriffsgeräts oder in regelmäßigen Abständen dynamisch zugewiesen werden und daher einem Benutzer nicht von vornherein bekannt sind. Aber auch statisch vergebene Netzadressen muss sich ein Benutzer nunmehr nicht mehr umständlich und fehlerträchtig merken.

Eine vorteilhafte Ausbildung des erfindungsgemäßen Netzzugriffsgeräts sieht einen Datenspeicher zum Speichern eines Identifizierungsmerkmals vor, welches von der Prüfeinheit zum Prüfen des übermittelten Identifizierungsmerkmals verwendet wird. Als Identifizierungsmerkmal kann beispielsweise eine Rufnummer oder eine Kennung gespeichert sein. Mit dem gespeicherten Identifizierungsmerkmal wird ein zuverlässiges und zügiges Überprüfen der Berechtigung des Anrufers oder Absenders für eine Freischaltung einer Verbindung vom öffentlichen Datennetz durchführbar. Vorzugweise ist der Datenspeicher als wiederbeschreibbarer Datenspeicher ausgelegt. Der Benutzer des Netzzugriffsgeräts kann dann ein Speichern oder ein Ändern des gespeicherten Identifizierungsmerkmals selber vornehmen, wodurch sich die Berechtigungsprüfung äußerst flexibel an Anwendungswünsche und -bedürfnisse des Benutzers anpassen lässt. Ferner sieht eine bevorzugte Ausgestaltung des erfindungsgemäßen Netzzugriffsgeräts eine Konfigurationsvorrichtung mit einem Konfigurationsspeicher zum Festlegen und Speichern von Verbindungeigenschaften vor einer Freigabe der Verbindung vor. Eine Konfiguration erfolgt z.B. durch den Benutzer oder einen Betreiber des Telekommunikationsnetzes vor oder während einer Inbetriebnahme des Netzzugriffsgeräts. Eine spätere Festlegung oder Änderung von Verbindungseigenschaften während des Betriebs ist ebenfalls durchführbar. Dabei werden insbesondere möglichen Aktivitäten über eine freigegebene Verbindung zu einem öffentlichen Datennetz festgelegt. Wie bei der entsprechenden Ausbildung des erfindungsgemäßen Verfahrens lässt sich auf diese Weise eine freizugebende Verbindung optimal an eine Vielzahl von Anwendungen und Aktivitäten anpassen. Weiterhin wird die Sicherheit vor unbefugten Zugriffen aus dem öffentlichen Datennetz durch eine Festlegung möglicher Aktivitäten optimiert.

Weitere Ausbildungen des erfindungsgemäßen Netzzugriffsgeräts korrespondieren jeweils mit einer oben beschriebenen Ausgestaltung des erfindungsgemäßen Verfahrens und verfügen daher über entsprechende Vorteile.

Ferner ergeben sich weitere Ausgestaltungen und Vorteile aus dem Gegenstand der Unteransprüche, sowie der Zeichnung mit der dazugehörigen Beschreibung.

Ein Ausführungsbeispiel der Erfindung ist nachstehend unter Bezugnahme auf die zugehörige Zeichnung näher erläutert.

### Kurze Beschreibung der Zeichnung

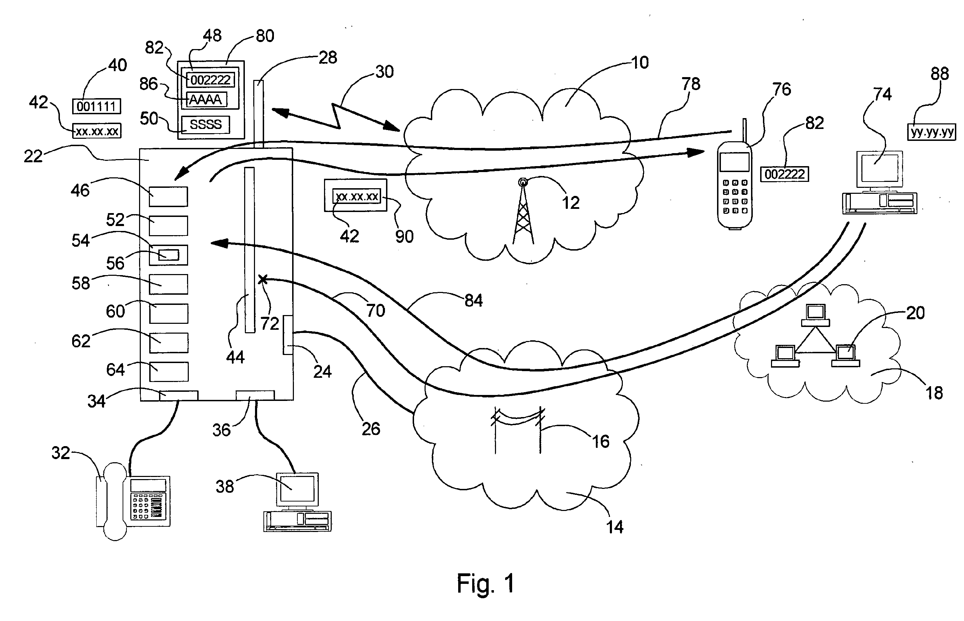

- Fig. 1: zeigt in einer schematischen Prinzipskizze ein Ausfiihrungsbeispiel des erfindungsgemäßen Verfahrens und eines entsprechenden Netzzugriffsgeräts zum Freigeben einer Verbindung über das öffentliche paketorientierte Datennetz an einer Firewall.

### Bevorzugtes Ausführungsbeispiel

In Fig. 1 wird mit 10 ein Mobilfunknetz bezeichnet. Das Mobilfunknetz 10 ist ein öffentliches, zellulares Mobilfunknetz der 2,5., 3. oder 4. Generation und ist beispielsweise nach dem GSM-, GPRS-, EDGE-, UMTS-, HSDPA-, CDMA2000-, FOMA-, TD-SCDMA-, LTE/SEA oder WiMAX-Standard ausgebildet. Dem Fachmann sind solche Mobilfunknetze mit den entsprechenden Bestandteilen geläufig. Der Einfachheit halber wird das Mobilfunknetz 10 daher nur durch eine Wolke mit einem darin enthaltenen Funkmast 12 stilisiert dargestellt.

Weiterhin wird in Fig. 1 mit 14 ein leitungsgebundenes Festnetz bezeichnet. Das Festnetz 14 ist nach dem bekannten analogen oder ISDN-Standard und dem DSL-Standard ausgebildet. Auch das Festnetz 14 wird der Einfachheit halber durch eine Wolke mit darin enthalten Telegrafenmasten 16 stilisiert dargestellt.

Sowohl das Mobilfunknetz 10 als auch das Festnetz 14 ermöglichen einem Benutzer eine Telekommunikation. Sie werden daher im Folgenden auch als Telekommunikationsnetze 10, 14 bezeichnet. Ferner ermöglichen die Telekommunikationsnetze 10, 14 einem Benutzer einen Zugriff auf das Internet als ein öffentliches paketorientiertes Datennetz 18. Aufbau und Funktionsweise des Internets 18 sind dem Fachmann ebenfalls bekannt. Das Internet 18 wird daher in Fig. 1 durch eine Wolke mit darin enthaltenen, untereinander verbundenen Rechnern 20 stilisiert dargestellt.

Mit einem Netzzugriffsgerät 22 bei einem Benutzer kann der Benutzer auf mindestens eines der Telekommunikationsnetze 10, 14 zugreifen und Dienste des Telekommunikationsnetzes 10, 14 oder, über das Telekommunikationsnetz 10, 14, Dienste des Internets 18 in Anspruch nehmen. Für leitungsgebundene Verbindungen zum Festnetz 14 verfügt das Netzzugriffsgerät 22 über eine kabelbasierte Festnetzschnittstelle 24 für ein Kabel 26 des Festnetzes 14. Alternativ oder zusätzlich ist in dem Netzzugriffsgerät 22 eine Mobilfunkschnittstelle 28 für Verbindungen zum Mobilfunknetz 10 über Funksignale 30 vorgesehen.

Das Netzzugriffsgerät 22 ist beispielsweise ein CPE-Modem (CPE: Customer Premises Equipment), ein DSL-Modem (DSL: Digital Subscriber Line), ein DSL-Router, ein DSL-WLAN-Router (WLAN: Wireless Local Area Network) oder ein IAD-Modem (Integrated Access Device). Das Netzzugriffsgerät 22 kann aber auch ein Mobilfunkendgerät, wie ein Mobiltelefon oder Smartphone, ein stationärer Rechner (z.B. PC), ein mobiler Rechner (z.B. Notebook, Netbook, Personal Digital Assistent) oder ein anderes Gerät mit integrierter Modemfunktionalität darstellen.

Zum optionalen Anschluss eines analogen oder ISDN-Telefongeräts 32 ist eine Telefonie-Schnittstelle 34 vorgesehen sein. Über eine Datenschnittstelle 36 (z.B. funk- oder kabelbasiert nach einem IEEE-802-Standard) ist eine Verbindung mit einem Rechner 38 oder einem in Fig. 1 nicht dargestellten lokalen Netzwerk für einen Datenaustausch mit dem Netzzugriffsgerät 22 möglich. Auf diese Weise sind Dienste des Telekommunikationsnetzes 10, 14 oder des Internets 18 auch für den Rechner 38 oder das Telefongerät 32 verfügbar. Für leitungsvermittelte Dienste, beispielsweise Telefonie, Fax oder SMS-Kurznachrichten, wird dem Netzzugriffsgerät 22 von dem entsprechenden Telekommunikationsnetz 10, 14 eine Rufnummer 40 zugeteilt. Mit einer Netzadresse 42, welche dem Netzzugriffsgerät 22 ebenfalls von dem entsprechenden Telekommunikationsnetz 10, 14 zugeordneten wird, werden paketorientierte Verbindungen über das Internet 18 ermöglicht. Bei der Netzadresse 42 kann es sich um eine dauerhaft zugeteilte oder eine dynamische Netzadresse handeln.

Zum Schutz gegen unerlaubte oder böswillige Zugriffe auf oder aus dem Internet 18 ist in dem Netzzugriffsgerät 22 eine sogenannte Firewall 44 vorgesehen. Die Firewall 44 filtert Datenpakete, welche über eine Verbindung zwischen dem Internet 18 und dem Netzzugriffsgerät 22 ausgetauscht werden, anhand eines Ziel-Ports, einer Quell-Adresse und einer Ziel-Adresse. Diese Angaben sind in jedem Datenpaket enthalten. Eine Prüfung von Datenpaketen erfolgt mit einem zuvor festgelegten Regelwerk. Ferner ist der Einsatz weitere Filter, wie beispielsweise Inhaltsfilter, in der Firewall 44 möglich.

Das Netzzugriffsgerät 22 enthält weiterhin eine Empfangseinrichtung 46 zum Empfangen eines Anrufs oder einer Kurznachricht, z.B. eine SMS-, EMS- (Enhanced Message Service) oder MMS- (Multimedia Messaging Service) Nachricht, mit mindestens einem Identifizierungsmerkmal 48. Der Anruf oder die Kurznachricht ist an die Rufnummer 40 des Netzzugriffsgeräts 22 gerichtet. Als Identifizierungsmerkmal 48 werden eine mittels CLIP übermittelte Rufnummer und/oder eine als Inhalt des Anrufs oder der Kurznachricht übermittelte Kennung von der Empfangseinrichtung 46 empfangen. Zusätzlich kann die Empfangseinrichtung 46 im Inhalt des Anrufs oder der Kurznachricht enthaltene Steuerungsbefehle 50 für das Netzzugriffsgerät 22 oder eine Netzadresse 88 eines für eine Verbindung über das Internet verwendetes Endgerät 74 empfangen. Dazu kann das Netzzugriffsgerät 22 bei einem Anruf z.B. ein DTMF- (Dual Tone Multiple Frequency) Verfahren oder ein Spracherkennungssystem verwenden.

Mit einer Prüfeinheit 52 wird mindestens ein empfangenes Identifizierungsmerkmal 48 anhand von in einem Datenspeicher 54 gespeicherten Identifizierungsmerkmalen 56 geprüft. Der Datenspeicher 54 ist zum Ändern von gespeicherten Identifizierungsmerkmalen 56 durch den Benutzer als wiederbeschreibbarer Speicher ausgelegt. Bei einer Prüfung wird eine Übereinstimmung zwischen mindestens einem empfangenen Identifizierungsmerkmal 48 und einem gespeicherten Identifizierungsmerkmal 56 geprüft. Eine Freigabeeinrichtung 58 des Netzzugriffsgeräts 22 lässt bei positiver Prüfung durch die Prüfeinheit 52 eine von dem Internet 18 eingehende Verbindung bzw. ein Passieren von entsprechenden Datenpakete durch die Firewall 44 zu. Dazu ändert die Freigabeeinrichtung 58 das Regelwerk der Firewall 44. Dabei kann die optional übermittelte Netzadresse 88 des Endgeräts 74 berücksichtigt werden.

Ferner ist in dem Netzzugriffsgerät 22 eine Konfigurationsvorrichtung 60 und ein Konfigurationsspeicher 62 vorgesehen. Die Konfigurationsvorrichtung 60 legt Verbindungseigenschaften einer freigegebenen Verbindung zum Internet 18 und darüber zugelassene Aktivitäten vor einer Freigabe fest. Als Verbindungseigenschaften können beispielsweise eine maximale Dauer, ein Datenvolumen oder eine Datenrate festgelegt werden. Durch Freigabe von Ports, welche bestimmten Prozessen oder Anwendungen zugewiesen sind, können mögliche Aktivitäten festgelegt werden. Die Konfigurationsvorrichtung 60 stellt dafür entsprechende Betriebsparameter des Netzzugriffsgeräts 22 und der Firewall 44 ein. Für eine Konfiguration einer freizugebenden Verbindung nutzt die Konfigurationsvorrichtung 60 in dem Konfigurationsspeicher 62 gespeicherte oder als Steuerungsbefehle 50 übermittelte Konfigurationsdaten. In dem Konfigurationsspeicher 62 gespeicherte Konfigurationsdaten sind zuvor durch den Benutzer, einen Betreiber des Telekommunikationsnetzes 10, 14 oder einem Hersteller des Netzzugriffsgeräts 22 festgelegt worden.

Weiterhin löst die Konfigurationsvorrichtung 60 bei entsprechenden Konfigurationsdaten eine Übermittlung der statischen oder dynamisch zugewiesenen Netzadresse 42 des Netzzugriffsgeräts 22 per Kurznachricht oder E-Mail durch ein Adressenübermittlungsmodul 64 aus. Dabei kann eine im Konfigurationsspeicher 62 gespeicherte Rufnummer oder E-Mail-Adresse als Zieladresse verwendet werden. Es ist aber auch die Verwendung einer Rufnummer oder E-Mail-Adresse möglich, welche mit dem Anruf oder der Kurznachricht zum Freigeben einer Internet-Verbindung übermittel wurde.

Im Folgenden werden die Funktionsweise und das Zusammenwirken der oben genannten Komponenten des Netzzugriffsgeräts 22 zusammen mit einem entsprechenden, beispielhaften Verfahren zum Freigeben einer Verbindung über das öffentliche paketorientierte Datennetz 18 durch die Firewall 44 beschrieben.

Zunächst werden alle oder bis auf wenige sichere Verbindungen alle Verbindungen 70, über das Internet 18 und eines der Telekommunikationsnetze 10, 14 zum Zugriffsgerät 22 durch die Firewall 44 gesperrt, Kreuz 72. Die Firewall 44 erkennt entsprechenden Datenpakete an der Quell-Adresse, der Ziel-Adresse und der Portnummer und lässt diese Datenpakete nicht passieren. Hierdurch wird eine sehr hohe Sicherheit gegenüber unbefugten Zugriffen aus dem Internet 18 erzielt.

Möchte nun der Benutzer oder eine autorisierte Person von einem internetfähigen Endgerät 74 über das Internet 18 und ein Telekommunikationsnetz 10, 14 auf das Netzzugriffsgerät 22 oder einen daran angeschlossenen Rechner 38, lokales Netzwerk oder ein anderes internetfähiges Endgerät zugreifen, so muss die Firewall 44 dieses zulassen. Dazu führt der Benutzer oder die autorisierte Person mit einem Mobilfunkendgerät 76 einen Anruf, Pfeil 78, an das Netzzugriffsgerät 22 aus oder sendet eine Kurznachricht 80 an das Netzzugriffsgerät 22. In beiden Fällen wird hierfür die Rufnummer 40 des Netzzugriffsgeräts 22 verwendet. Alternativ kann ein Anruf oder das Senden einer Kurznachricht auch mit einem in Fig. 1 nicht dargestelltem Festnetzendgerät für das Festnetz 14 durchgeführt werden. Eine dem Mobilfunkendgerät 76 zugeordnete Rufnummer 82 wird bei einem Anruf 78 durch ein CLIP-Verfahren oder bei einem Senden einer Kurznachricht 80 zusammen mit der Kurznachricht 80 an das Netzzugriffsgerät 22 übermittelt. Entsprechendes gilt bei der Verwendung eines Festnetzendgeräts.

Bei einem Anruf 78 empfängt die Empfangseinrichtung 46 die Rufnummer 82 des anrufenden Mobilfunkendgeräts 76 oder eines Festnetzendgeräts per CLIP-Verfahren, ohne das der Anruf 78 entgegengenommen werden muss. Bei einer Kurznachricht 80 empfängt die Empfangseinrichtung 46 die Rufnummer 82 des Absenders zusammen mit der Kurznachricht 80.

In einer ersten Durchführungsaltemative überprüft die Prüfeinheit 52 eine Übereinstimmung der empfangenen Rufnummer 82 mit einer im Datenspeicher 54 gespeicherten Rufnummer als gespeichertes Identifizierungsmerkmal 56. Bei einer Übereinstimmung gibt die Freigabeeinrichtung 58 die Firewall 44 für eine Verbindung 84 von dem Endgerät 74 zum Zugriffsgerät 22 frei. Hierfür muss die Rufnummer 82 des zur Freigabe verwendeten Mobilfunkendgeräts 76 oder eines Festnetzendgeräts vorher durch den Benutzer oder einer autorisierten Person in dem Datenspeicher 54 gespeichert werden. Für eine Freigabe kann folglich nur ein vorher festgelegtes Mobilfunkendgerät 76 oder Festnetzendgerät verwendet werden. In dem Datenspeicher 54 ist auch eine Speicherung von mehreren Rufnummern 82 als gespeicherte Identifizierungsmerkmale 56 von verschiedenen Endgeräten möglich. Auf diese Weise wird eine hohe Sicherheit bei einer Freigabe erreicht.

Möchte der Benutzer eine Freigabe von einem beliebigen Mobilfunk- oder Festnetzendgerät durchführen, so übermittelt er nach einer zweiten Durchfuhrungsaltemative mit dem Anruf 78 oder der Kurznachricht 80 eine Kennung 86, z.B. eine PIN (Persönliche Identifikationsnummer) oder ein Passwort. Die Kennung 86 wird wiederum von der Empfangseinrichtung 46 empfangen und an die Prüfeinheit 52 übergeben. Die Prüfeinheit 52 prüft eine Übereinstimmung der empfangenen Kennung 86 als Identifizierungsmerkmal 48 mit einer in dem Datenspeicher 54 gespeicherten Kennung als gespeichertes Identifizierungsmerkmal 56. Bei einem positiven Ergebnis der Prüfung gibt die Freigabeeinrichtung 58 die Firewall 44 für die eingehende Verbindung 84 frei. Somit ist sehr flexibel und sicher eine Nutzung eines beliebigen Endgeräts für eine Freigabe möglich.

Bei einer dritten Durchführungsaltemative empfängt die Empfangseinrichtung 46 sowohl die Rufnummer 82 als auch die Kennung 86 als Identifizierungsmerkmale 48. Die Prüfeinheit 52 prüft eine Übereinstimmung der Rufnummer 82 und der Kennung 86 mit in dem Datenspeicher 54 gespeicherten Identifizierungsmerkmalen 56. Nur wenn in beiden Fällen ein positives Prüfergebnis vorliegt, gibt die Freigabeeinrichtung 58 die Firewall 44 für die eingehende Verbindung 84 frei. Auf diese Weise wird auch bei einer unbefugten Benutzung des Mobilfunkendgeräts 76 (z.B. bei Verlust oder Diebstahl) oder eines Festnetzendgeräts eine hohe Sicherheit gegen Angriffe aus dem Internet 18 gewährleistet.

Vor einer Freigabe der Verbindung 84 wird diese durch die Konfigurationsvorrichtung 60 konfiguriert. Dazu werden vorab in dem Konfigurationsspeicher 62 gespeicherte Einstellungen für das Netzzugriffsgerät 22 und die Firewall 44 verwendet. Eine Speicherung dieser Einstellungen erfolgt mit der Konfigurationsvorrichtung 60 durch den Benutzer oder eine andere autorisierte Person. Optional können mit dem Anruf 78 oder der Kurznachricht 80 Steuerungsbefehle 50 für die Verbindung 84 übermittelt werden. Diese werden ebenfalls von der Empfangseinrichtung 46 empfangen und an die Konfigurationsvorrichtung 60 weitergeleitet. Es können beispielsweise eine Dauer, eine Datenrate oder ein Datenvolumen der Verbindung 84, eine Netzadresse 88 des für die Verbindung 84 verwendeten Endgeräts 74 oder erlaubte Portnummer festgelegt werden. Mit der Netzadresse 88 ist eine Beschränkung der Freigabe von Verbindungen auf das verwendete Endgerät 74 möglich. Zusammen mit einer Portnummer wird oft auch eine dem entsprechenden Port zugeordnete Anwendung festgelegt. Durch eine solche Konfiguration der Verbindung 84 wird der Schutz vor Angriffen aus dem Internet 18 optimiert.

Bei einer Freigabe ist ferner eine Übermittlung der Netzadresse 42 des Netzzugriffsgeräts 22 mittels einer Kurznachricht 90 an das Mobilfunkendgerät 76 oder ein verwendetes Festnetzendgerät möglich. Alternativ kann dies auch durch eine E-Mail erfolgen. Somit ist auch bei einer dynamisch zugewiesenen und somit häufig wechselnden Netzadresse 42 ein Aufbau der Verbindung 84 unproblematisch möglich.

## Patentansprüche

1. Verfahren zum Freigeben einer eingehenden, zunächst durch eine Firewall (44) blockierten Verbindung (84) über ein öffentliches paketorientiertes Datennetz (18) an der Firewall (44) eines Netzzugriffsgeräts (22), welches über mindestens ein Telekommunikationsnetz (10, 14) eine paketbasierte Datenverbindung (84) über das öffentlichen Datennetz (18) mittels einer dem Netzzugriffsgerät (22) zugeordneten Netzadresse (42) und Telefonie mittels einer dem Netzzugriffsgerät (22) zugeordneten Rufnummer (40) ermöglicht, mit den Verfahrensschritten
a) Empfangen eines an die Rufnummer (40) gerichteten Anrufs (78) eines Anrufers oder einer an die Rufnummer (40) gerichtete Kurznachricht (80) eines Absenders über das Telekommunikationsnetz (10) durch das Netzzugriffsgerät (22), wobei mit dem Anruf (78) oder der Kurznachricht (80) ein Identifizierungsmerkmal (48) übermittelt wird, und
b) Prüfen des Identifizierungsmerkmals (48) durch das Netzzugriffsgerät (22),
c) Ändern eines Regelwerks an der Firewall (44) durch eine Freigabeeinrichtung (58) des Netzzugriffsgeräts (22) und Freigeben einer vom öffentlichen paketorientlerten Datennetz (18) eingehenden, zunächst durch die Firewall (22) blockierten Verbindung (84) durch die Freigabeeinrichtung (58) bei positivem Prüfungsergebnis des Identifizierungsmerkmals (48).

2. Verfahren nach Anspruch 1, **dadurch gekennzeichnet, dass** eine Übereinstimmung des übermittelten Identifizierungsmerkmals (48) mit einem bei dem Netzzugriffsgerät (22) gespeicherten Identifizierungsmerkmal (56) geprüft wird.

3. Verfahren nach Anspruch 1 oder Anspruch 2, **dadurch gekennzeichnet, dass** als Identifizierungsmerkmal (48) eine an das Netzzugriffsgerät (22) übermittelte Rufnummer (82) des Anrufenden oder des Absenders einer Kurznachricht (80) verwendet wird.

4. Verfahren nach einem der Ansprüche 1 bis 3, **dadurch gekennzeichnet, dass** als Identifizierungsmerkmal (48) eine von dem Anrufer oder dem Absender eingegebenen und durch den Anruf (78) oder die Kurznachricht (80) übermittelte Kennung (86) verwendet wird.

5. Verfahren nach einem der Ansprüche 1 bis 4, **dadurch gekennzeichnet, dass** mit dem Identifizierungsmerkmal (48) eine Netzadresse (88) eines für die Verbindung (84) benutzten Endgeräts (74) durch den Anruf (78) oder die Kurznachricht (80) übermittelt wird.

6. Verfahren nach einem der Ansprüche 1 bis 5, **gekennzeichnet durch** Festlegen von Verbindungseigenschaften vor einer Freigabe der Verbindung (84).

7. Verfahren nach einem der Ansprüche 1 bis 6, **gekennzeichnet durch** Übermitteln von Steuerungsbefehlen (50) für das Netzzugriffsgerät (22) **durch** den Anruf (78) oder die Kurznachricht (80).

8. Verfahren nach einem der Ansprüche 1 bis 7, **dadurch gekennzeichnet, dass** die zugewiesene Netzadresse (42) des Netzzugriffsgeräts (22) nach dem Freigeben der Verbindung (84) durch ein Adressenübermittlungsmodul (64) mit einer E-Mail oder einer Kurznachricht (90) an den Anrufenden oder Absender übermittelt wird.

9. Netzzugriffsgerät (22), welches über mindestens ein Telekommunikationsnetz (10, 14) eine paketbasierte Datenverbindung (84) über ein öffentliches paketorientiertes Datennetz (18) mit einer dem Netzzugriffsgerät (22) zugeordneten Netzadresse (42) und Telefonie mit einer dem Netzzugriffsgerät (22) zugeordneten Rufnummer (40) ermöglicht, wobei das Netzzugriffsgerät (22) enthält
a) eine Firewall (44) zum Blockieren von Verbindungen (70), welche aus dem öffentlichen paketorientierten Datennetz (18) eingehen,
b) eine Empfangseinrichtung (46) zum Empfangen eines an die Rufnummer (40) gerichteten Anrufs (78) eines Anrufers oder einer an die Rufnummer (40) gerichtete Kurznachricht (80) eines Absenders und einem durch den Anruf (78) oder die Kurznachricht (80) übermittelten Identifizierungsmerkmals (48),
c) eine Prüfeinheit (52) zum Prüfen des Identifizierungsmerkmals (48) und
d) eine Freigabeeinrichtung (58) zum Ändern eines Regelwerks an der Firewall (44) und zum Freigeben einer vom öffentlichen paketorientierten Datennetz (18) eingehenden, zunächst durch die Firewall (44) blockierten Verbindung (84) bei positivem Prüfungsergebnis des Identifizierungsmerkmals (48) durch die Prüfeinheit (52) vorgesehen ist.

10. Netzzugriffsgerät (22) nach Anspruch 9, **dadurch gekennzeichnet, dass** ein Datenspeicher (54) zum Speichern eines Identifizierungsmerkmals (56) vorgesehen ist, welches von der Prüfeinheit (52) zum Prüfen des übermittelten Identifizierungsmerkmals (48) verwendet wird.

11. Netzzugriffsgerät (22) nach Anspruch 9 oder 10, **dadurch gekennzeichnet, dass** die Empfangseinrichtung (46) zum Empfangen einer an das Netzzugriffsgerät (22) übermittelten Rufnummer (82) des Anrufenden oder des Kurznachrichtenabsenders als Identifizierungsmerkmal (48) ausgebildet ist.

12. Netzzugriffsgerät (22) nach einem der Ansprüche 9 bis 11, **dadurch gekennzeichnet, dass** die Empfangseinrichtung (46) zum Empfangen einer von dem Anrufer oder dem Absender eingegebenen und durch den Anruf (78) oder die Kurznachricht (80) übermittelten Kennung (86) als Identifizierungsmerkmal (48) ausgebildet ist.

13. Netzzugriffsgerät (22) nach einem der Ansprüche 9 bis 12, **dadurch gekennzeichnet, dass** eine Konfigurationsvorrichtung (60) mit einem Konfigurationsspeicher (62) zum Festlegen und Speichern von Verbindungeigenschaften vor einer Freigabe der Verbindung (84) vorgesehen ist.

14. Netzzugriffsgerät (22) nach einem der Ansprüche 9 bis 13, **dadurch gekennzeichnet, dass** die Empfangseinrichtung (46) zum Empfangen von durch den Anruf (78) oder die Kurznachricht (80) übermittelten Steuerungsbefehlen (50) für das Netzzugriffsgerät (22) ausgebildet ist.

15. Netzzugriffsgerät (22) nach einem der Ansprüche 9 bis 14, **gekennzeichnet durch** ein Adressenübermittlungsmodul (64) zum Übermitteln der dem Netzzugriffsgerät (22) zugewiesene Netzadresse (42) **durch** eine E-Mail oder eine Kurznachricht (90) an den Anrufenden oder Absender nach dem Freigeben der Verbindung (84).

## Claims

1. A method for approving a connection (84) that comes in via a public packet-oriented data network (18) at the firewall (44) of a network access device (22) and that has in the first instance been blocked by said firewall (44), which network access device (22) enables a packet-based data connection (84) via the public data network (18) by using at least one telecommunication network (10, 14) by means of a network address (42) allocated to the network access device (22) and telephony by means of a call number (40) allocated to the network access device (22), comprising the process steps of
a) receiving a caller's call (78) directed to the call number (40) or a sender's short message (80) directed to the call number (40) via the telecommunication network (10) by the network access device (22), wherein an identifier (48) will be transmitted with the call (78) or the short message (80), and
b) checking the identifier (48) by the network access device (22),
c) changing a set of regulations at the firewall (44) by an approval device (58) of the network access device (22) and approving a connection (84), that comes in from the public packet-oriented data network (18) and has in the first instance been blocked by said firewall (44), by the approval device (58) in case of a positive check result with respect to the identifier (48).

2. A method according to claim 1, **characterized in that** it will be checked whether the transmitted identifier (48) coincides with an identifier (56) stored in the network access device (22).

3. A method according to claim 1 or claim 2, **characterized in that** a call number (82) of the caller or the sender of a short message (80) which has been transmitted to the network access device (22) will be used as identifier (48).

4. A method according to one of the claims 1 through 3, **characterized in that** an identification (86) entered by the caller or the sender and transmitted by the call (78) or the short message (80) will be used as identifier (48).

5. A method according to one of the claims 1 through 4, **characterized in that** a network address (88) of a terminal (74) used for the connection (84) will be transmitted with the identifier (48) by means of the call (78) or the short message (80).

6. A method according to one of the claims 1 through 5, **characterized by** determining connection features before approving the connection (84).

7. A method according to one of the claims 1 through 6, **characterized by** the transmission of control commands (50) for the network access device (22) by means of the call (78) or the short message (80).

8. A method according to one of the claims 1 through 7, **characterized in that** after the approval of the connection (84) the allocated network address (42) of the network access device (22) will be transmitted in an e-mail or a short message (90) to the caller or the sender by means of an address transmission module (64).

9. A network access device (22) which, by using at least one telecommunication network (10, 14), enables a packet-based data connection (84) via a public packet-oriented data network (18) by means of a network address (42) allocated to the network access device (22) and telephony by means of a call number (40) allocated to the network access device (22), wherein the network access device (22) contains:
a) a firewall (44) for blocking connections (70) which come in from the public packet-oriented data network (18),
b) a reception device (46) for receiving a caller's call (78) or a sender's short message (80) directed to the call number (40) and an identifier (48) transmitted by the call (78) or the short message (80),
c) a checking unit (52) for checking the identifier (48) and
d) an approval device (58) for modifying a set of regulations at the firewall (44) and for approving a connection (84), that comes in from the public packet-oriented data network (18) and has in the first instance been blocked by said firewall (44), in case of a positive check result with respect to the identifier (48) provided by the checking unit (52).

10. A network access device (22) according to claim 9, **characterized in that** a data storage (54) is provided for storing an identifier (56) which is used by the checking unit (52) for checking the transmitted identifier (48).

11. A network access device (22) according to claim 9 or 10, **characterized in that** the reception device (46) is designed for receiving a call number (82) of the caller or the short message sender, which call number is transmitted to the network access device (22), as identifier (48).

12. A network access device (22) according to one of the claims 9 through 11, **characterized in that** the reception device (46) is designed for receiving an identification (86) entered by the caller or the sender and transmitted by the call (78) or the short message (80) as identifier (48).

13. A network access device (22) according to one of the claims 9 through 12, **characterized in that** a configuration device (60) comprising a configuration storage (62) is provided for determining and storing connection features before an approval of the connection (84).

14. A network access device (22) according to one of the claims 9 through 13, **characterized in that** the reception device (46) is designed for receiving control commands (50) for the network access device (22) which have been transmitted by the call (78) or the short message (80).

15. A network access device (22) according to one of the claims 9 through 14, **characterized by** an address transmission module (64) for transmitting the network address (42) allocated to the network access device (22) by means of an e-mail or a short message (90) to the caller or the sender after the approval of the connection (84).

## Revendications

1. Procédé de libération d'une liaison qui arrive par un réseau de données publique et orienté par paquets (18) au pare-feu (44) d'un appareil d'accès au réseau (22) et qui a d'abord été bloquée par le dit pare-feu (44), lequel appareil d'accès au réseau (22) permet d'établir une liaison de données (84) via un réseau de données publique (18) en utilisant au moins un réseau de télécommunication par moyen d'une adresse de réseau (42) attribuée à l'appareil d'accès au réseau (22) et une téléphonie par moyen d'un numéro d'appel (40) attribué à l'appareil d'accès au réseau (22), comprenant les étapes de procédé de
a) recevoir un appel (78) d'un appelant destiné au numéro d'appel (40) ou un message court (80) d'un expéditeur destiné au numéro d'appel (40) via le réseau de télécommunication (10) par l'appareil d'accès au réseau (22), un identifiant (48) étant transmis avec l'appel (78) ou avec le message court (80), et
b) vérifier l'identifiant (48) par l'appareil d'accès au réseau (22),
c) modifier un système de règles au pare-feu (44) par un dispositif de libération (58) de l'appareil d'accès au réseau (22) et libérer une liaison, (84) qui arrive par le réseau de données publique et orienté par paquets (18) et qui a d'abord été bloquée par le dit pare-feu (44), par moyen du dispositif de libération (58) dans le cas d'un résultat de vérification positif par rapport à l'identifiant (48).

2. Procédé selon la revendication 1, **caractérisé en ce qu'**il est vérifié si l'identifiant transmis (48) coïncide avec un identifiant (56) mémorisé dans l'appareil d'accès au réseau (22).

3. Procédé selon la revendication 1 ou la revendication 2, **caractérisé en ce qu'**un numéro d'appel (82) de l'appelant ou de l'expéditeur d'un message court (80) transmis à l'appareil d'accès au réseau est utilisé en tant que identifiant (48).

4. Procédé selon l'une des revendications 1 à 3, **caractérisé en ce qu'**une identification (86) entrée par l'appelant ou par l'expéditeur et transmise par l'appel (78) ou par le message court (80) est utilisée en tant que identifiant (48).

5. Procédé selon l'une des revendications 1 à 4, **caractérisé en ce qu'**une adresse de réseau (88) d'un terminal (74) utilisé pour la liaison (84) est transmise avec l'identifiant (48) par l'appel (78) ou par le message court (80).

6. Procédé selon l'une des revendications 1 à 5, **caractérisé par** la détermination de caractéristiques de liaison avant la libération de la liaison (84).

7. Procédé selon l'une des revendications 1 à 6, **caractérisé par** la transmission de commandes de contrôle (50) destinées à l'appareil d'accès au réseau (22) par moyen de l'appel (78) ou par moyen du message court (80).

8. Procédé selon l'une des revendications 1 à 7, **caractérisé en ce qu'**après la libération de la liaison (84) l'adresse de réseau (42) attribuée à l'appareil d'accès au réseau (22) est transmise dans un message électronique ou un message court (90) à l'appelant ou à l'expéditeur par moyen d'un module de transmission d'adresses (64).

9. Appareil d'accès au réseau (22) qui permet d'établir une liaison de données (84) à base de paquets via un réseau de données publique et orienté par paquets (18) en utilisant au moins un réseau de télécommunication par moyen d'une adresse de réseau (42) attribuée à l'appareil d'accès au réseau (22) et une téléphonie par moyen d'un numéro d'appel (40) attribué à l'appareil d'accès au réseau (22), l'appareil d'accès au réseau (22) comprenant:
a) un pare-feu (44) destiné à bloquer des liaisons (70) qui arrivent du réseau de données publique et orienté par paquets (18),
b) un dispositif de réception (46) pour recevoir un appel (78) d'un appelant destiné au numéro d'appel (40) ou un message court (80) d'un expéditeur destiné au numéro d'appel (40) et un identifiant (48) transmis par l'appel (78) ou par le message court (80),
c) une unité de vérification (52) pour vérifier l'identifiant (48) et
d) un dispositif de libération (58) pour modifier un système de règles au pare-feu (44) et pour libérer une liaison, (84) qui arrive par le réseau de données publique et orienté par paquets (18) et qui a d'abord été bloquée par le dit pare-feu (44), dans le cas d'un résultat de vérification positif par rapport à l'identifiant (48) fourni par l'unité de vérification (52).

10. Appareil d'accès au réseau (22) selon la revendication 9, **caractérisé en ce qu'**une mémoire de données (54) est prévue pour mémoriser un identifiant (56) qui est utilisé par l'unité de vérification (52) pour vérifier l'identifiant (48) transmis.

11. Appareil d'accès au réseau (22) selon la revendication 9 ou la revendication 10, **caractérisé en ce que** le dispositif de réception (46) est configuré pour recevoir un numéro d'appel (82) de l'appelant ou de l'expéditeur du message court, lequel numéro est transmis à l'appareil d'accès au réseau (22), en tant que identifiant (48).

12. Appareil d'accès au réseau (22) selon l'une des revendications 9 à 11, **caractérisé en ce que** le dispositif de réception (46) est configuré pour recevoir une identification (86) entrée par l'appelant ou par l'expéditeur et transmise par l'appel (78) ou par le message court (80) en tant que identifiant (48).

13. Appareil d'accès au réseau (22) selon l'une des revendications 9 à 12, **caractérisé en ce qu'**un dispositif de configuration (60) comprenant une mémoire de configuration (62) est prévu pour déterminer et mémoriser des caractéristiques de liaison avant une libération de la liaison (84).

14. Appareil d'accès au réseau (22) selon l'une des revendications 9 à 13, **caractérisé en ce que** le dispositif de réception (46) est configuré pour recevoir des commandes de contrôle (50) destinées à l'appareil d'accès au réseau (22) et transmises par l'appel (78) ou par le message court (80).

15. Appareil d'accès au réseau (22) selon l'une des revendications 9 à 14, **caractérisé par** un module de transmission d'adresses (64) pour transmettre l'adresse de réseau (42) attribuée à l'appareil d'accès au réseau (22) par moyen d'un message électronique ou d'un message court (90) à l'appelant ou à l'expéditeur après la libération de la liaison (84).
